(19) Europäisches Patentamt
European Patent Office
Office européen des brevets

(11) **EP 0 810 268 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.⁷: **C09C 1/00**, C08K 3/00, C09D 7/12, C09C 3/10

(21) Anmeldenummer: **97810314.1**

(22) Anmeldetag: **22.05.1997**

(54) **Bismuthvanadat-Pigmente**

Bismuth vanadate pigments

Pigments de vanadate de bismuth

(84) Benannte Vertragsstaaten:
**CH DE FR GB IT LI**

(30) Priorität: **31.05.1996 CH 136996**

(43) Veröffentlichungstag der Anmeldung:
**03.12.1997 Patentblatt 1997/49**

(73) Patentinhaber: **Ciba Specialty Chemicals Holding Inc.**
**4057 Basel (CH)**

(72) Erfinder: **Bugnon, Philippe**
**1724 Essert (CH)**

(56) Entgegenhaltungen:
**EP-A- 0 232 512        EP-A- 0 271 813**
**WO-A-96/36668        DE-A- 3 839 865**
**FR-A- 2 167 733**

- **DATABASE WPI Week 8145 Derwent Publications Ltd., London, GB; AN 81-82629d XP002064258 & JP 56 122 875 A (DAINICHISEIKA COLOR & CHEM. MFG.), 26.September 1981**

# EP 0 810 268 B1

## Beschreibung

Die vorliegende Erfindung betrifft mit Polyvinylalkohol beschichtete Bismuthvanadat-Pigmente. Sie zeichnen sich durch hohe Farbstärke und Sättigung und insbesondere in wässrigen Automobillacksystemen durch einen beachtlichen Glanz der Lackierungen aus.

Bismuthvanadate sind seit langem bekannt und die Möglichkeit ihrer Verwendung als Pigmente wurde, wie aus G. Buxbaum, Industrial Inorganic Pigments, VCH-Verlag (1993) und z.B. den US-Patenten 3 843 554 und 4 115 142 hervorgeht, in den 70er Jahren erkannt. Sie sind insbesondere wegen ihrer geringen Toxizität und der guten coloristischen Eigenschaften sehr geschätzt. In den vergangenen Jahren sind unzählige Methoden entwickelt worden, um deren Eigenschaften weiter zu verbessern, z.B. durch teilweisen Ersatz von Bi und V durch andere Metalle oder Nichtmetalle oder durch Beschichtung mit anorganischen oder organischen Substanzen. Solche Verfahren sind z.B. in US 5 536 309, US 4 115 142, US 4 272 296, US 4 316 746, US 4 455 174, US 5 203 917, US 5 336 312, US 5 399 197, US 4 752 460 und EP 441 101 beschrieben.

Die Verwendung von Polyvinylalkohol mit organischen und anorganischen Pigmenten in Wasserfarben, Leimfarben und Papierstreichmassen zur Verbesserung der Dispergierbarkeit und Lagerstabilität ist z.B. aus CA 113(20); 173457j, CA 87(20):153532w, GB 1 077 422, GB 1 408 842 und US 4 997 870 bekannt. Als anorganische Pigmente werden Eisenoxide, Cd-Gelb, Bleichromate, $TiO_2$, Kreide, Gips und Russ genannt. CA83(8):62038r beschreibt eine Mischung zur Spritzbeschichtung von Automobilteilen, bestehend aus $CaCO_3$, $BaSO_4$, $TiO_2$, Silica Gel oder Polyethylenterephthalat und ein wasserlösliches Polymer, wie z.B. Polyvinylalkohol. Wird die mit einer solchen Mischung erhaltene Schicht mit einer wasserunlöslichen Kunststoffschicht überzogen, so erhält man eine Beschichtung mit erhöhter Beständigkeit gegen Schmutz und Kratzer. Gemäss CA77(4):21651t kann die Rheologie von wässrigen Lacksystemen durch die Verwendung von z.B. Polyvinylalkohol, Vinylacetat-Crotonsäure-Copolymer, Natriumalginat, u.a. verbessert werden.

Es ist nun gefunden worden, dass durch Beschichtung von Bismuthvanadatpigmenten mit Polyvinylalkohol die Farbstärke und Farbtonreinheit (Sättigung) der Pigmente und der Glanz der damit hergestellten Ausfärbungen insbesondere in wässrigen Automobillacksystemen ganz überraschend verbessert werden.

Die vorliegende Erfindung betrifft demnach Bismuthvanadat-Pigmente, deren Teilchenoberfläche mit 1 bis 20 Gew.% Polyvinylalkohol, bezogen auf die Pigmentmenge, überzogen ist.

Bei den Bismuthvanadatpigmenten handelt es sich vorzugsweise um solche der allgemeinen Zusammensetzung

$$Bi_2O_3 \text{ x } V_2O_5,$$

wobei Bismuth und Vanadium teilweise durch andere Metalle oder Nichtmetalle ersetzt sein können. Es handelt sich dabei um bekannte Bismuthvanadat-Pigmente.

Bei den Metallen und Nichtmetallen, die Bismuth und Vanadium teilweise ersetzen können, handelt es sich vorzugsweise um Li, Mg, Zn, Al und insbesondere Ca, sowie W und insbesondere P und Mo.

Bevorzugt handelt es sich um die als C.I. Pigment Yellow 184 bezeichneten, handelsüblichen Bismuthvanadat-Pigmenten (vgl. The Bulletin of the Bismuth Institute 68,1995).

Geeignete Polyvinylalkohole sind die allgemein bekannten Polyvinylalkohole, die gegebenenfalls durch Ester, Ether oder Acetalgruppen modifiziert sind, sowie polyvinylalkoholhaltige Copolymere, wie z.B. Blockcopolymere mit Polyvinylalkoholsegmenten. Zweckmässig verwendet man die handelsüblichen Polyvinylalkohole mit einem Hydrolysegrad über 80 %, bevorzugt zwischen 86 und 99,8 % und einem Polymerisationsgrad zwischen 200 und 2500, bevorzugt zwischen 250 und 1800.

Die erfindungsgemässen Bismuthvanadatpigmente lassen sich auf einfache Weise z.B. dadurch herstellen, dass das zu behandelnde Pigment in wässriger Suspension mit dem Polyvinylalkohol unter Rühren nachbehandelt wird. Dabei kann vom trockenen Pigmentpulver, einem Presskuchen oder einer aus der Synthese anfallenden Suspension ausgegangen werden. Der Polyvinylalkohol kann entweder vorgängig mit Wasser gelöst werden oder fest der Pigmentsuspension zugegeben werden. Falls nötig kann die Suspension nach üblichen Methoden mit einem Dispergieraggregat (z.B. einem Hochdruckhomogenisator oder einem Hochgeschwindigkeitsrührer) dispergiert werden. Meistens ist dies nicht nötig, da Polyvinylalkohole im allgemeinen sehr gute benetzende Eigenschaften besitzen. Der Pigmentgehalt in der Suspension kann in weiten Grenzen variiert werden und kann gegebenenfalls bis zu 40 Gew.% betragen. Zweckmässig setzt man Suspensionen mit 5 bis 20 Gew.% Pigment ein. Die Nachbehandlung des Pigments mit Polyvinylalkohol kann bei Raumtemperatur, gegebenenfalls aber auch bei bis zu ca. 80°C erhöhter Temperatur, durchgeführt werden. Die Rührdauer variiert zwischen 1 und 20 Stunden. Die Menge des der Suspension zuzugebenden Polyvinylalkohols beträgt, wie bereits erwähnt, 1 bis 20, bevorzugt aber 3 bis 10 Gew.%, bezogen auf die Pigmentmenge.

Die erfindungsgemässen Bismuthvanadat-Pigmente eignen sich zum Pigmentieren von hochmolekularem organischem Material.

Hochmolekulare organische Materialien, die mit den erfindungsgemässen Bismuthvanadaten pigmentiert werden können, sind z.B. Celluloseether und -ester, wie Ethylcellulose, Nitrocellulose, Celluloseacetat und Cellulosebutyrat, natürliche Harze und Kunstharze, wie Polymerisationsharze oder Kondensationsharze, z.B. Aminoplaste, insbesondere Harnstoff- und Melamin-Formaldehydharze, Alkydharze, Phenoplaste, Polycarbonate, Polyolefine, wie Polyethylen und Polypropylen, Polystyrol, Polyvinylchlorid, Polyacrylnitril, Polyacrylsäureester, Polyamide, Polyurethane, Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Bismuthvanadate als Toner oder in Form von Präparaten einzusetzen. Bezogen auf das zu pigmentierende hochmolekulare organische Material kann man die erfindungsgemässen Bismuthvanadate in einer Menge von 0,01 bis 30 Gew.-%, vorzugsweise 0,1 bis 10 Gew.-%, einsetzen.

Die erhaltenen Ausfärbungen, beispielsweise in Kunststoffen, Fasern, Lacken oder Drucken zeichnen sich, ausser durch die ausserordentlich hohe Farbton-Reinheit und Transparenz durch hohe Farbstärke, gute Dispergierbarkeit, gute Ueberlackier-, Migrations-, Hitze-, Licht- und Wetterbeständigkeit, sowie durch einen guten Glanz, aus.

Die erfindungsgemässen Bismuthvanadate zeichnen sich aber, wie bereits erwähnt, ganz besonders durch ihre hohe Farbstärke und Farbtonreinheit, sowie für den hohen Glanz bei Verwendung in lösungsmittelhaltigen und insbesondere in wässrigen Lack-, insbesondere Automobillack-Systemen aus.

Die nachfolgenden Beispiele dienen zur Erläuterung der Erfindung. Sofern nichts anderes vermerkt, bedeuten Prozente Gewichtsprozente.

Beispiel 1: 345,6 g eines 39,1 %igen Presskuchens von Bismuthvanadat-Pigment (C.I. Pigment Yellow 184) werden mit 6,75 g Polyvinylalkohol ®MOWYOL 3/83 (Hoechst) in 998 g Wasser in 3 Stunden dispergiert. Die Pigmentsuspension wird dann filtriert, der Rückstand wird zweimal mit 2 l Wasser gewaschen und im Vakuumtrockenschrank bei 80°C getrocknet.

Beispiel 2: 13,1 g des Produktes von Beispiel 1 werden in einem Lacksystem bestehend aus

| 10 g | Polyester-Bindemittel (25 % Festkörpergehalt) |
|---|---|
| 0,15 g | Dispergiermittel ®SURFYNOL CT 136 (Air Products and Chem. Inc., USA) und |
| 1,62 g | Wasser |

eingearbeitet.

Dieser Mahlansatz wird mit 100 g 1 mm-Glasperlen mit einem ®DISPERMAT CV zuerst während 10 Minuten bei 1000 UpM und dann während 30 Minuten bei 3000 UpM dispergiert. Danach werden

| 66,7 g | einer Polyacrylat-Dispersion (25 % Festkörpergehalt) |
|---|---|
| 38,5 g | Wasser |
| 5,6 g | Butylglycol und |
| 0,3 g | Dimethylethanolamin |

zugegeben.

5 g des so erhaltenen bunten Lacks werden mit 20 g eines entsprechenden aber mit $TiO_2$ anstelle des Buntpigments hergestellten weissen Lacks verschnitten. Nach gutem Rühren wird dieser Lack mit einem Rakel in dünner Schicht (150 mμ) auf einer Polyethylen-Folie ausgezogen und nach 30 Minuten in einem Ofen während weiterer 30 Minuten getrocknet.

Die so erhaltene Lackierung und eine entsprechende, mit unbehandeltem Bismuthvanadat-Pigment erhaltene Lackierung wurden bezüglich Farbstärke, Sättigung (Chroma C*) und Glanz miteinander verglichen.

Die Farbstärke des Standards (Lackierung mit unbehandeltem Bismuthvanadat-Pigment) wird mit einem Zeiss-Spektrophotometer gemäss DIN 53234 gemessen und den Wert 100 zugeteilt. Die Probe (Lackierung mit erfindungsgemässem Pigment) wird im Vergleich dazu ermittelt.

Das Chroma C* wird nach CIELAB-Normen bestimmt.

Der Glanz wird mittels eines Reflektometers (Zehntner ZGM 1020®) bei einem Winkel von 20° gemäss DIN 67530 gemessen.

Die Resultate sind in nachfolgender Tabelle angegeben:

| | Farbstärke | Chroma C* | Glanz |
|---|---|---|---|
| Unbehandeltes Pigment | 100 | 43,8 | 41 % |
| erfindungsgemässes Pigment | 134 | 47,9 | 58 % |

## Patentansprüche

1. Bismuthvanadat-Pigmente, deren Teilchenoberfläche mit 1 bis 20 Gew.% Polyvinylalkohol, bezogen auf die Pigmentmenge, überzogen ist.

2. Bismuthvanadat-Pigmente gemäss Anspruch 1, **dadurch gekennzeichnet, dass** es sich um Bismuthvanadate der allgemeinen Zusammensetzung

$$Bi_2O_3 \ x \ V_2O_5,$$

wobei Bismuth und Vanadium teilweise durch andere Metalle oder Nichtmetalle ersetzt sein können, handelt.

3. Bismuthvanadat-Pigmente gemäss Anspruch 2, **dadurch gekennzeichnet, dass** es sich bei den Metallen und Nichtmetallen, die Bismuth und Vanadium teilweise ersetzen können, um Li, Mg, Zn, Al, Ca, sowie W, P und Mo handelt.

4. Bismuthvanadat-Pigmente gemäss Anspruch 3, **dadurch gekennzeichnet, dass** es sich bei den Metallen und Nichtmetallen um Ca, P oder Mo handelt.

5. Bismuthvanadat-Pigmente gemäss Anspruch 1, **dadurch gekennzeichnet, dass** es sich um Bismuthvanadate handelt, die unter der Bezeichnung C.I. Pigment Yellow 184 bekannt sind.

6. Bismuthvanadat-Pigmente gemäss Anspruch 1, **dadurch gekennzeichnet, dass** deren Teilchenoberfläche mit 3 bis 10 Gew.-% Polyvinylalkohol, bezogen auf die Pigmentmenge, überzogen ist.

7. Bismuthvanadat-Pigmente gemäss Anspruch 1, **dadurch gekennzeichnet, dass** der Polyvinylalkohol einen Hydrolysengrad über 80 % und einen Polymerisationsgrad zwischen 200 und 2500 aufweist.

8. Mit Bismuthvanadat-Pigmente gemäss Anspruch 1 pigmentiertes hochmolekulares organisches Material.

9. Hochmolekulares organisches Material gemäss Anspruch 8, **dadurch gekennzeichnet, dass** es sich um ein wässriges Lack-System handelt.

## Claims

1. A bismuth vanadate pigment, the particle surface of which is coated with 1 to 20 % by weight of polyvinyl alcohol, based on the amount of pigment.

2. A bismuth vanadate pigment according to claim 1, in which the bismuth vanadate is of the general composition

$$Bi_2O_3 \ x \ V_2O_5,$$

wherein bismuth and vanadium may be partially replaced with other metals or nonmetals.

3. A bismuth vanadate pigment according to claim 2, wherein the metals and nonmetals which may partially replace bismuth and vanadium are Li, Mg, Zn, Al, Ca, and also W, P and Mo.

**4.** A bismuth vanadate pigment according to claim 3, wherein the metals and nonmetals are Ca, P or Mo.

**5.** A bismuth vanadate pigment according to claim 1, wherein the bimuth vanadate is that which is known as C.I. pigment Yellow 184.

**6.** A bismuth vanadate pigment according to claim 1, the particle surface of which is coated with 3 to 10 % by weight of polyvinyl alcohol, based on the amount of pigment.

**7.** A bismuth vanadate pigment according to claim 1, wherein the polyvinyl alcohol has a degree of hydrolysis of above 80 % and a degree of polymerisation from 200 to 2500.

**8.** A high molecular weight organic material pigmented with a bismuth vanadate pigment as claimed in claim 1.

**9.** A high molecular weight organic material according to claim 8, which is an aqueous paint system.


**Revendications**

**1.** Pigments de vanadate de bismuth, dont la surface des particules est recouverte avec 1 à 20 % en poids d'alcool polyvinylique, par rapport à la quantité de pigment.

**2.** Pigments de vanadate de bismuth selon la revendication 1, **caractérisés en ce qu'**il s'agit de vanadates de bismuth de la composition générale

$$Bi_2O_3 \text{ x } V_2O_5,$$

dans laquelle le bismuth et le vanadium peuvent être remplacés partiellement par d'autres métaux ou métalloïdes.

**3.** Pigments de vanadate de bismuth selon la revendication 2, **caractérisés en ce qu'**il s'agit pour les métaux et métalloïdes, qui peuvent remplacer partiellement le bismuth et le vanadium, de Li, Mg, Zn, Al, Ca, ainsi que de W, P et Mo.

**4.** Pigments de vanadate de bismuth selon la revendication 3, **caractérisés en ce qu'**il s'agit pour les métaux et métalloïdes de Ca, P ou Mo.

**5.** Pigments de vanadate de bismuth selon la revendication 1, **caractérisés en ce qu'**il s'agit de vanadates de bismuth, qui sont connus sous la désignation de C.I. Pigment Yellow 184.

**6.** Pigments de vanadate de bismuth selon la revendication 1, caractérisés en ce la surface de leurs particules est revêtue avec de 3 à 10 % en poids d'alcool polyvinylique, par rapport à la quantité de pigment.

**7.** Pigments de vanadate de bismuth selon la revendication 1, caractérisés en ce l'alcool polyvinylique présente un degré d'hydrolyse supérieur à 80 % et un degré de polymérisation entre 200 et 2500.

**8.** Matériau organique de haut poids moléculaire pigmenté avec des pigments de vanadate de bismuth selon la revendication 1.

**9.** Matériau organique de haut poids moléculaire selon la revendication 8, **caractérisé en ce qu'**il s'agit d'un système de peinture aqueux.